Europäisches Patentamt

European Patent Office

Office européen des brevets

(11) Veröffentlichungsnummer : **0 350 636 B1**

(12) **EUROPÄISCHE PATENTSCHRIFT**

(45) Veröffentlichungstag der Patentschrift :
**11.11.92 Patentblatt 92/46**

(51) Int. Cl.⁵ : **B23B 5/32**

(21) Anmeldenummer : **89110753.4**

(22) Anmeldetag : **14.06.89**

(54) **Unterflur-Radsatzdrehmaschine zum Reprofilieren der Radreifenumrisse von Eisenbahn-Radsätzen.**

(30) Priorität : **14.07.88 DE 3823832**

(43) Veröffentlichungstag der Anmeldung :
**17.01.90 Patentblatt 90/03**

(45) Bekanntmachung des Hinweises auf die
Patenterteilung :
**11.11.92 Patentblatt 92/46**

(84) Benannte Vertragsstaaten :
**AT BE CH DE ES FR GB GR IT LI LU NL SE**

(56) Entgegenhaltungen :
**EP-A- 0 185 850**
**DE-A- 2 110 547**

(56) Entgegenhaltungen :
**DE-A- 2 500 061**
**DIE NEUE CNC-GENERATION Prospekt Nr. 22,**
**Juli 1987, ç Seiten, Hoesch Maschinenfabrik**
**Deutschland AG**

(73) Patentinhaber : **Hoesch Maschinenfabrik**
**Deutschland Aktiengesellschaft**
**Borsigstrasse 22**
**W-4600 Dortmund 1 (DE)**

(72) Erfinder : **Brinkmann, Dirk, Dipl.-Ing.**
**In der Heide 9**
**W-4670 Lünen-Niederaden (DE)**
Erfinder : **Reyer, Manfred, Dipl.-Ing.**
**Altumstrasse 3**
**W-4600 Dortmund 30 (DE)**

EP 0 350 636 B1

## Beschreibung

Die Erfindung bezieht sich auf eine Unterflur-Radsatzdrehmaschine zum Reprofilieren der Radreifenumrisse von Eisenbahn-Radsätzen, mit vier angetriebenen Reibrollen, zwei Drehsupporten und einer Maschinensteuerung, wobei die Reibrollen paarweise an je einen Radreifenumriß eines Radsatzes andrückbar sind.

Eine Unterflur-Radsatzdrehmaschine der vorgenannten Art ist bekannt durch den DE-Prospekt Nr. 222 der Hoesch Maschinenfabrik Deutschland AG, Dortmund, Ausgabe Juli 1987.

Bei einer derartigen Unterflur-Radsatzdrehmaschine erzeugen die angetriebenen Reibrollen die Dreh- bzw. Schnittbewegung des Radsatzes.

Die von den Reibrollen auf den Radsatz übertragbaren Reibkräfte sind verhältnismäßig klein, da einerseits die Stützkraft der Reibrollen die maximale Achslast des Radsatzes nicht überschreiten darf und andererseits der Reibwert zwischen den Reibrollen und den Radreifenumrissen gering ist. Der Reibwert wird besonders ungünstig beeinflußt, wenn an den Radreifenumrissen Schmutz und/oder Fett haftet.

Da der Reibwert starken Schwankungen unterworfen ist, kommt es bei der bekannten Unterflur-Radsatzdrehmaschine während der Radsatzbearbeitung gelegentlich zu einem Durchrutschen der Reibrollen an den Radreifenumrissen. In einem solchen Fall ist von Nachteil, daß die Bearbeitungszeit für den Radsatz länger wird.

Der Erfindung liegt die Aufgabe zugrunde, eine Unterflur-Radsatzdrehmaschine der eingangs genannten Art so auszubilden, das ein Durchrutschen der Reibrollen an den Radreifenumrissen während der Radsatzbearbeitung vermieden wird.

Erfindungsgemäß wird diese Aufgabe dadurch gelöst, daß eine Einrichtung zur Ermittlung des zwischen einer Reibrolle und einem Radreifenumriß auftretenden Schlupfes vorgesehen ist, die in Abhängigkeit des ermittelten Schlupfes die Vorschubgeschwindigkeit der Drehsupporte steuert.

Die Einrichtung nach der Erfindung weist ein Erfassungsgerät zum Messen der Umfangsgeschwindigkeit einer Reibrolle, ein Erfassungsgerät zum Messen der Umfangsgeschwindigkeit eines Radreifenumrisses und eine Auswertestation auf.

Zweckmäßigerweise ist das Erfassungsgerät zum Messen der Umfangsgeschwindigkeit einer Reibrolle ein Drehzahlmesser.

Das Erfassungsgerät zum Messen der Umfangsgeschwindigkeit eines Radreifenumrisses enthält eine Meßrolle.

Im folgenden wird die Erfindung anhand einer Zeichnung, in der ein Ausführungsbeispiel schematisch dargestellt ist, näher beschrieben.

Es zeigt

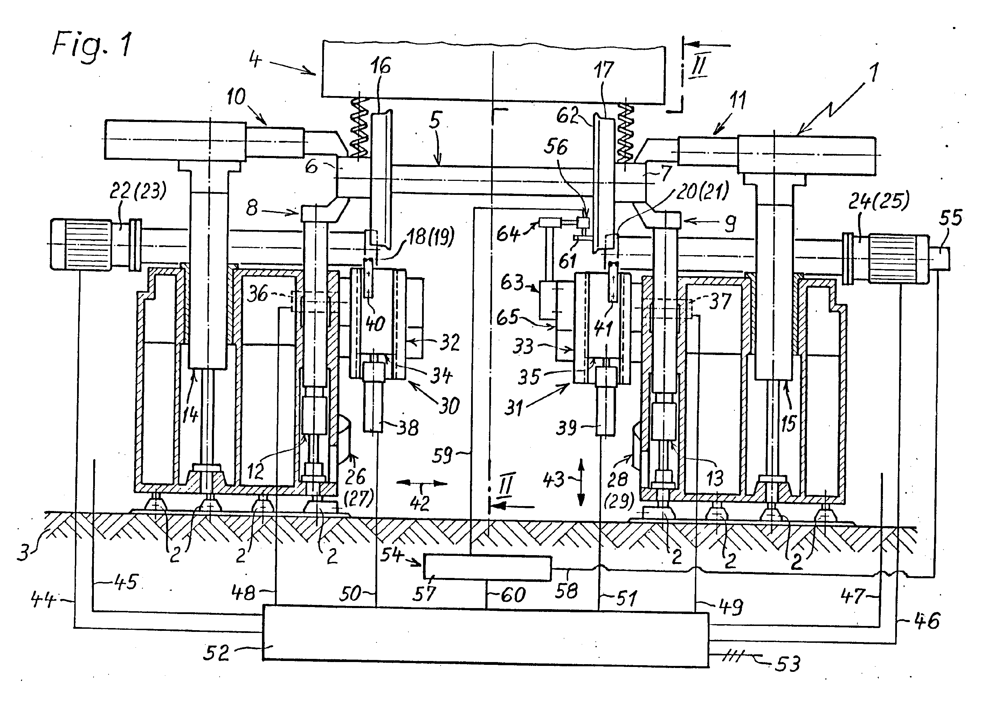

Fig. 1 eine Unterflur-Radsatzdrehmaschine mit einem von ihr aufgenommenen Eisenbahn-Radsatz im Längsschnitt mit einer Teilansicht eines auf dem Eisenbahn-Radsatz aufliegenden Fahrzeugaufbaus und mit einem Teilschnitt durch ein Fundament,

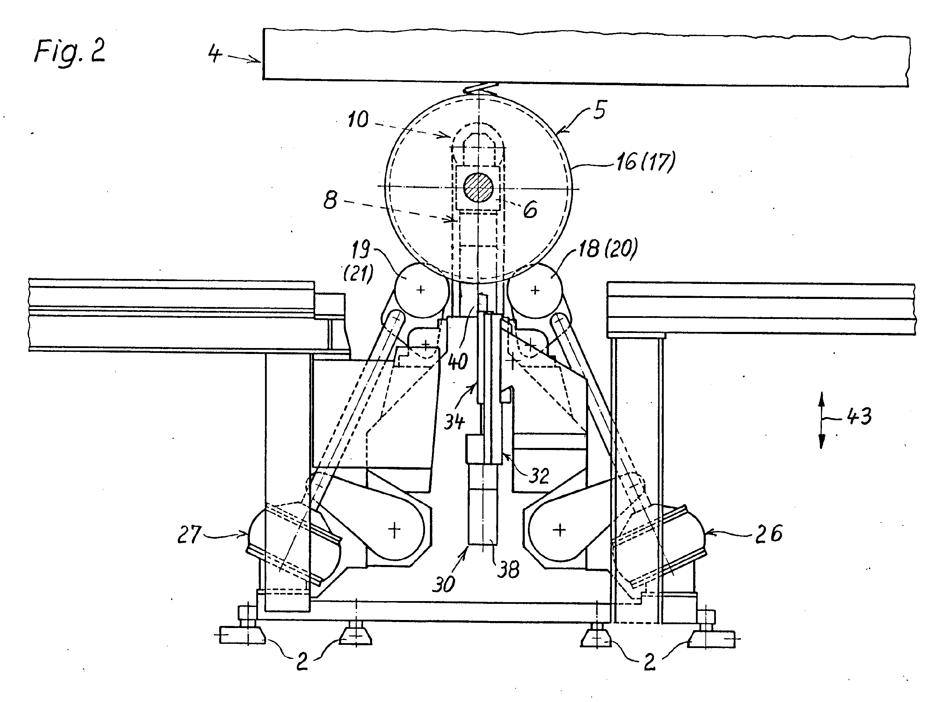

Fig. 2 einen Schnitt entsprechend der Linie II-II in Fig. 1 in vergrößertem Maßstab.

Eine Unterflur-Radsatzdrehmaschine 1 steht auf mehreren höhen- und seitenverstellbaren Stützelementen 2, die auf einem Fundament 3 angeordnet sind.

Ein in einem Schienenfahrzeug 4 eingebauter Radsatz 5 wird an seinen Achslagerkästen 6, 7 gehalten durch zwei Stützvorrichtungen 8, 9 und zwei Andrückvorrichtungen 10, 11.

Die Stütz- (8, 9) und die Andrückvorrichtungen 10, 11 sind jeweils mit einem Hydraulikzylinder 12, 13, 14, 15 ausgeführt.

An den beiden Radreifenumrissen 16, 17 des Radsatzes 5 greifen je zwei schwenkbar angeordnete Reibrollen 18, 19, 20, 21 an, von denen jede von einem Motor 22, 23, 24, 25 angetrieben wird.

Jeder Reibrolle 18, 19, 20, 21 ist ein Schwenkantrieb 26, 27, 28, 29 zugeordnet.

Die Unterflur-Radsatzdrehmaschine 1 enthält zwei Drehsupporte 30, 31, die je mit einem Längs- (32, 33) und einem Planschlitten 34, 35 ausgestattet sind.

Jeder Längsschlitten 32, 33 wird angetrieben von einem Motor 36, 37, jeder Planschlitten 34, 35 von einem Motor 38, 39.

Jeder Planschlitten 34, 35 trägt ein Drehwerkzeug 40, 41, das in Längs- (Doppelpfeil 42) und Planvorschubrichtung (Doppelpfeil 43) steuerbar ist.

Die Motoren 22 bis 25, die die Reibrollen 18 bis 21 antreiben, und die Motoren 36 bis 39 der Drehsupporte 30, 31 sind über je eine Leitung 44, 45, 46, 47, 48, 49, 50, 51 an eine Maschinensteuerung 52 angeschlossen. Die Maschinensteuerung 52 wird gespeist von einem Stromnetz 53.

Die Unterflur-Radsatzdrehmaschine 1 besitzt eine Einrichtung 54 zur Ermittlung des zwischen der Reibrolle 20 und dem Radreifenumriß 17 auftretenden Schlupfes.

Die Einrichtung 54 weist ein Erfassungsgerät 55 zum Messen der Umfangsgeschwindigkeit $v_a$ der Reibrolle

2

20, ein Erfassungsgerät 56 zum Messen der Umfangsgeschwindigkeit $v_b$ des Radreifenumrisses 17 und eine Auswertestation 57 auf.

Die Auswertestation 57 ist über je eine Leitung 58, 59, 60 mit den Erfassungsgeräten 55, 56 und der Maschinensteuerung 52 verbunden.

Das Erfassungsgerät 55 ist ein an den Motor 24 gekuppelter Drehzahlmesser.

Das Erfassungsgerät 56 hat eine Meßrolle 61, die an die Innenseite 62 des Radreifenumrisses 17 gedrückt ist. Das Andrücken der Meßrolle 61 bewirkt eine auf einer Hubvorrichtung 63 angeordnete Verschiebevorrichtung 64. Die Hubvorrichtung 63 ist an den Ständer 65 des Drehsupports 31 angeschraubt.

Im Leerlauf der Unterflur-Radsatzdrehmaschine 1 ist die Umfangsgeschwindigkeit $v_a$ der Reibrolle 20 quasi gleich der Umfangsgeschwindigkeit $v_b$ des Radreifenumrisses 17, da die auf den Radsatz 5 zu übertragenden Reibkräfte sehr klein sind.

Die Auswertestation 57 berücksichtigt dies durch Bildung des Quotienten q

$$q = \frac{\text{Umfangsgeschwindigkeit } v_a - \text{Schlupfgeschwindigkeit } v_c}{\text{Umfangsgeschwindigkeit } v_a}$$

$$= \frac{v_b}{v_a} \approx 1.$$

Während der Bearbeitung des Radsatzes 5 ermittelt die Auswertestation 57 den Schlupf zwischen der angetriebenen Reibrolle 20 und dem Radreifenumriß 17 durch Bildung des Quotienten $q_1$

$$= \frac{v_{a1} - v_{c1}}{v_{a1}} = \frac{v_{b1}}{v_{a1}}.$$

In Abhängigkeit von dem ermittelten Quotienten $q_1$ steuert die Auswertestation 57 die Vorschubgeschwindigkeit der Drehsupporte 30, 31.

Wird beispielsweise bei der Radsatzbearbeitung der Quotient $q_1$ kleiner, verhindert die Auswertestation 57 ein Durchrutschen der Reibrollen 18 bis 21 an den Radreifenprofilen 16, 17 durch Reduzierung der Vorschubgeschwindigkeit. Bei steigendem Quotienten $q_1$ bewirkt die Auswertestation 57 eine Erhöhung der Vorschubgeschwindigkeit und damit eine bessere Ausnutzung der Unterflur-Radsatzdrehmaschine 1.

## Patentansprüche

1. Unterflur-Radsatzdrehmaschine zum Reprofilieren der Radreifenumrisse von Eisenbahn-Radsätzen, mit vier angetriebenen Reibrollen (18,19,20,21), zwei Drehsupporten (30,31) und einer Maschinensteuerung (52), wobei die Reibrollen paarweise an je einen Radreifenumriß andrückbar sind, dadurch gekennzeichnet, das eine Einrichtung (54) zur Ermittlung des zwischen einer Reibrolle (18, 19, 20, 21) und einem Radreifenumriß (16, 17) auftretenden Schlupfes vorgesehen ist, die in Abhängigkeit des ermittelten Schlupfes die Vorschubgeschwindigkeit der Drehsupporte (30, 31) steuert.

2. Unterflur-Radsatzdrehmaschine nach Anspruch 1, dadurch gekennzeichnet, daß die Einrichtung (54) ein Erfassungsgerät (55) zum Messen der Umfangsgeschwindigkeit ($v_{a1}$) einer Reibrolle (18, 19, 20, 21), ein Erfassungsgerät (56) zum Messen der Umfangsgeschwindigkeit ($v_{b1}$) eines Radreifenumrisses (16, 17) und eine Auswertestation (57) aufweist.

3. Unterflur-Radsatzdrehmaschine nach den Ansprüchen 1 und 2, dadurch gekennzeichnet, das das Erfassungsgerät (55) zum Messen der Umfangsgeschwindigkeit ($v_{a1}$) einer Reibrolle (18, 19, 20, 21) ein Drehzahlmesser ist.

4. Unterflur-Radsatzdrehmaschine nach den Ansprüchen 1 und 2, dadurch gekennzeichnet, daß das Erfassungsgerät (56) zum Messen der Umfangsgeschwindigkeit ($v_{b1}$) eines Radreifenumrisses (16, 17) eine Meßrolle (61) enthält.

## Claims

1. Underfloor wheelset turning machine for the reprofiling of the wheel rim contour of railway vehicle wheelsets, comprising four driven friction rollers (18, 19, 20, 21), two rotary supports (30, 31) and a machine control system (52), wherein the friction rollers are arranged to be pressed in pairs against the periphery of each one of the wheel rims, characterised in that a device (54) is provided for determining the slip arising between a friction roller (18, 19, 20, 21) and a wheel rim periphery (16, 17) and for controlling the speed of advance of the rotary supports (30, 31) in dependence on the amount of slip determined.

2. Underfloor wheelset turning machine according to claim 1, characterised in that the device (54) comprises a detector (55) for measuring the peripheral speed ($v_{a1}$) of a friction roller (18, 19, 20, 21), a detector (56) for measuring the peripheral speed ($v_{b1}$) of the periphery of a wheel rim (16, 17) and an evaluation station (57).

3. Underfloor wheelset turning machine according to claims 1 and 2, characterised in that the detector (55) for measuring the peripheral speed ($v_{a1}$) of a friction roller (18, 19, 20, 21) is a tachometer.

4. Underfloor wheelset turning machine according to claims 1 and 2, characterised in that the detector (56) for measuring the peripheral speed ($v_{b1}$) of the periphery of a wheel rim (16, 17) includes a measuring roller (61).

**Revendications**

1. Tour à roues, en fosse, pour le reprofilage des contours de bandages d'essieux ferroviaires, avec quatre rouleaux de friction (18, 19, 20, 21) entraînés, deux supports rotatifs (30, 31) et une commande de machine (52), les rouleaux de friction pouvant être pressés, par paire, sur un contour de bandage, caractérisé en ce qu'il comprend un dispositif (54) pour la détermination du patinage se produisant entre un rouleau de friction (18, 19, 20, 21) et un contour de bandage (16, 17), qui commande la vitesse d'avancement des supports rotatifs (30, 31), en fonction du patinage ainsi défini.

2. Tour à roues, en fosse, selon la revendication 1, caractérisé en ce que le dispositif (54) comporte un appareil de détection (55) pour la mesure de la vitesse périphérique ($v_{a1}$) d'un rouleau de friction (18, 19, 20, 21), un dispositif de détection (56) pour la mesure de la vitesse périphérique ($v_{b1}$) d'un contour de bandage (16, 17) et un poste d'exploitation (57).

3. Tour à roues, en fosse, selon les revendications 1 et 2, caractérisé en ce que le dispositif de détection (55) pour la mesure de la vitesse périphérique ($v_{a1}$) d'un rouleau de friction (18, 19, 20, 21) est un compte-tours.

4. Tour à roues, en fosse, selon les revendications 1 et 2, caractérisé en ce que le dispositif de détection (56) pour la mesure de la vitesse périphérique ($v_{b1}$) d'un contour de bandage (16, 17) comporte un rouleau de mesure (61).

Fig. 1

Fig. 2